# EUROPEAN PATENT SPECIFICATION

(11) **EP 4 180 693 B1**
(45) Date of publication and mention of the grant of the patent: **07.05.2025**
(21) Application number: 22207095.5
(22) Date of filing: 14.11.2022
(51) Int. Cl.: F16H 25/20, F16H 25/04, F16H 25/18

(54) **ROTATING ACTUATOR FOR AN ACTIVE AERODYNAMICS SYSTEM**
DREHSTELLER FÜR EIN AKTIVES AERODYNAMIKSYSTEM
ACTIONNEUR ROTATIF POUR SYSTÈME AÉRODYNAMIQUE ACTIF

(30) Priority: 16.11.2021 IT 202100028976
(43) Date of publication of application: 17.05.2023
(73) Proprietor: Bitron S.p.A., 10122 Torino (IT)
(72) Inventor: PROMUTICO, Fabrizio, I-03010 ALATRI (Frosinone) (IT); SELLARI, Elio, I-03100 FROSINONE (IT)
(74) Representative: Vanzini, Christian

(56) References cited:
- EP-A1- 2 147 615
- WO-A1-2010/142771
- WO-A1-2021/069981
- FR-A1- 2 992 497

## Description

### Technical field

The present invention relates to a rotating actuator for an active aerodynamics system which may be used for the position control of adjustable parts of the bodywork of a vehicle. In particular, but not exclusively, the present invention is applicable to a motor vehicle, such as an automobile.

### Prior art

Rotating actuators for an active aerodynamics system are known. See, for example, patent publications DE 102014002455 B4 and EP 3183162 B1.

The patent FR 2992497 A1 disclosed a device for controlling a rotating member, comprising an electric motor, a rotating member, and a shaft wherein a transmission means is housed. The transmission means comprises two worms interconnected by a transmission element. One worm is rotationally driven by the electric motor and driving in translation the transmission element and the second worm is rotationally driven by the transmission element and driving in rotation the rotating member.

As is known, rotating actuators for driving an adjustable part of the bodywork of a vehicle, such as an air deflector device which may be adjusted into a plurality of positions during use, include a motor, for example an electric motor, which controls a system for transmitting the motion which drives, by means of a mechanical coupling, a part or device that is adjustable in position.

The rotating actuators for an active aerodynamics system for controlling adjustable parts of the bodywork of a vehicle are appreciated for being characterized by irreversibility of the system, that is, resistance to external loads applied on the adjustable mobile part which are not transferred from the motor to the output shaft.

Typically, in these drive systems there is a driving shaft integrally coupled with the motor, a transmission shaft integrally coupled with the part that is adjustable in position, and a transmission system for transferring the motion of the driving shaft to the transmission shaft. EP 3183162 B1 describes an actuation system in which the longitudinal axis of the driving shaft is parallel to the longitudinal axis of the transmission shaft, and the transmission of the rotary motion from the driving shaft to the transmission shaft is accomplished by means of an intermediate shaft. This intermediate shaft is positioned between the driving shaft and the transmission shaft and its longitudinal axis is orthogonal to the longitudinal axis of the driving shaft and to the longitudinal axis of the transmission shaft. Because of this architecture, the rotating actuator for an active aerodynamics system known from EP 3183162 B1 has an overall size of significant volume. DE 102014002455 B4 describes a solution that permits reduction of the overall dimensions, proposing an actuator in which the transmission of the motion between the driving shaft and transmission shaft is accomplished by means of a traveler coupled with the driving shaft and the transmission shaft via a drive screw coupling.

### Summary of the invention

A primary aim of the present invention is to realize a compact rotating actuator for an active aerodynamics system which makes it possible to further reduce the overall dimensions on board the vehicle.

The aforesaid and other aims and advantages, which will be better understood in the following, are achieved according to the present invention by a rotating actuator having the features set out in independent claim 1. Preferential embodiments of the invention are defined in the dependent claims.

In summary, a rotating actuator for an active aerodynamics system comprises a driving shaft and a transmission shaft that are parallel to and coaxial with one another, and further comprises a transmission for transferring the rotating motion from the driving shaft to the transmission shaft. The transmission comprises a traveler that is coaxial with the driving shaft and with the transmission shaft, a first drive screw coupling between the driving shaft and the traveler, and a second drive screw coupling between the traveler and the transmission shaft.

### Brief description of the drawings

The features and advantages of the present invention emerge from the detailed description of an exemplary embodiment made with reference to the attached drawings, given as an indication and not intended to be limiting, wherein:

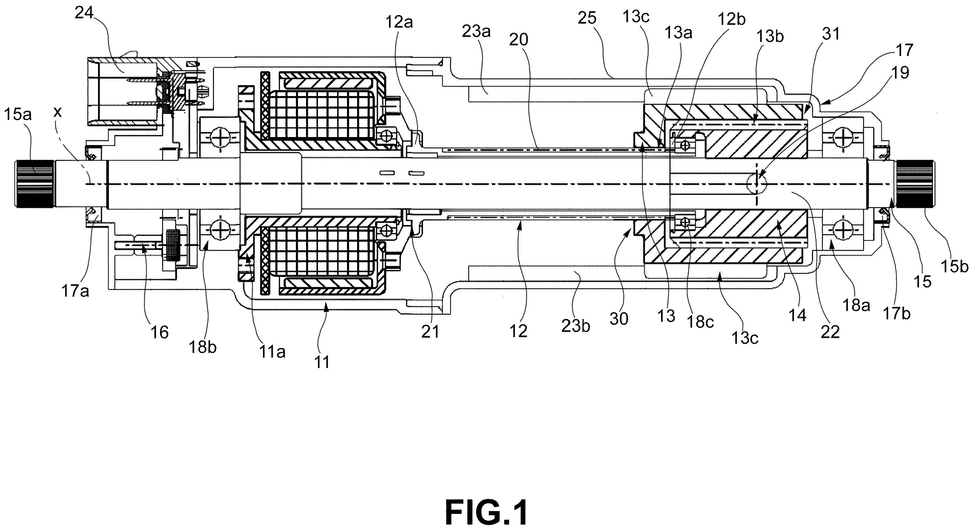

- Fig. 1 is a view in axial section of a rotating actuator for an active aerodynamics system according to an embodiment of the present invention.

### Detailed description

In reference to Fig. 1, the number 12 indicates a hollow driving shaft which extends along a longitudinal axis x. Throughout this description and in the claims that follow, the terms and expressions indicating positions and orientations, such as "axial" and "longitudinal," are intended to refer to the longitudinal axis x. In particular, the driving shaft 12 has a cavity which extends along the entire length thereof; in other words, the driving shaft 12 has a tubular shape.

The driving shaft 12 is controlled in its rotation about the longitudinal axis x by a motor 11, preferably an electric motor.

A first end (proximal end) 12a of the driving shaft 12 comprises a connection element 21 integrally tied to a rotor of the motor 11. The connection element 21, typically a flange, has the function of transferring the driving torque from the motor 11 to the driving shaft 12.

An external surface of the hollow driving shaft 12 is provided with a screw-thread 20, preferably trapezoidal, which is present in said external surface from the proximal end 12a to a distal end 12b, opposite the proximal end 12a, of the driving shaft 12 and is adapted to interface with a transmission 25.

A central transmission shaft 15, which is parallel to and coaxial with the driving shaft 12, has two ends 15a, 15b, at least one of which is configured for coupling with an adjustable part of the bodywork of a vehicle (not shown). The transmission shaft 15 is arranged partially within the driving shaft 12, and at least one of its two ends 15a, 15b protrudes outside of the driving shaft 12.

A threaded element 14, preferably a trapezoidal screw, is rotationally integral with an end portion 22 of the transmission shaft 15 by means of a mechanical connection 19 and is adapted to interface with the transmission 25.

The transmission shaft 15 is set in rotation by means of the transmission 25 and has a rotational speed less than the rotational speed of the driving shaft 12. This may be obtained by dimensioning the pitch of the external screw-thread 20 of the driving shaft in such a way that it is less than the pitch of the threaded element 14.

The transmission 25 comprises a traveller 13, which has a first threaded internal cylindrical cavity 13a and a second threaded internal cylindrical cavity 13b, and further comprises a first drive screw coupling 30 between the external screw-thread 20 of the driving shaft 12 and the first threaded internal cylindrical cavity 13a of the traveller 13, and a second drive screw coupling 31 between the threaded element 14 that is integral with the end portion 22 of the transmission shaft 15 and the second threaded internal cylindrical cavity 13b of the traveller 13.

In the preferential configuration, the first threaded internal cylindrical cavity 13a of the traveller 13 has a smaller diameter than the second threaded internal cylindrical cavity 13b of the traveller 13.

The outer surface of the traveller 13 advantageously has at least one interface portion 13c (in the illustrated example, a plurality of interface portions) which has the function of impeding the rotation of the traveller 13 and of enabling the translation of said traveler (as will be better described below).

The transmission 25 has the function of converting the rotating motion of the driving shaft 12 into the translating motion of the traveller 13 by means of the first drive screw coupling 30, and converting the translating motion of the traveller 13 into the rotating motion of the transmission shaft 15 by means of the second drive screw coupling 31.

The rotating actuator for an active aerodynamics system described here is housed within a housing 17 on which a circuit board 24 for controlling the motor 11 is installed. The circuit board 24 is configured for being connected to an external control unit (not shown) arranged on the vehicle. The housing 17 has, at the longitudinal ends, two circular holes 17a, 17b which allow for the passage of the ends 15a, 15b of the transmission shaft 15 out of the housing 17.

At least one guide 23a, 23b (in the example shown, a plurality of guides) of a shape and dimension substantially corresponding to the interface portion 13c which is present on the external surface of the traveller 13 is advantageously present in the internal surface of the housing 17, in such a way as to use a prismatic torque between the housing 17 and the traveler 13.

Rolling bearings 18a, 18b that support the rotation of the transmission shaft 15 are also mounted in the internal surface of the housing 17. A bearing 18c supports the rotation of the driving shaft 12 and also supports the threaded element 14 that is integral with the end portion 22 of the transmission shaft 15.

The functioning of the present invention is intended as follows. When the motor 11 operates, the driving torque is transferred to the driving shaft 12 by means of the connection element 21, setting the driving shaft 12 in rotation in a first direction of rotation. The first drive screw coupling 30, between the external screw-thread 20 of the driving shaft 12 and the first threaded internal cylindrical cavity 13a of the traveller 13, actuates said traveler, which translates in a direction substantially parallel to the longitudinal axis x. The translating movement of the traveller 13 is accomplished by means of the prismatic coupling present between the interface portions 13c present on the outer surface of the traveller 13 and the guides 23a, 23b present in the internal surface of the housing 17. The second drive screw coupling 31, between the second threaded internal cylindrical cavity 13b of the traveller 13 and the threaded element 14 that is integral with the end portion 22 of the transmission shaft 15, converts the translating motion of the traveller 13 into the rotating motion of the transmission shaft 15, which is axially constrained by the bearings 18a, 18b. This rotating motion of the transmission shaft 15 is slower than the rotating motion of the driving shaft 12. The rotation of the transmission shaft 15 controls the position of an adjustable part of the bodywork of a vehicle integrally tied thereto.

Some embodiments may provide a position sensor 16 arranged on the circuit board 24 in order to detect the angular position of the transmission shaft during the rotation.

It is intended that the invention is not limited to the embodiment described and illustrated here, which is to be considered as an example of a rotating actuator for an active aerodynamics system; the invention is instead susceptible to modifications related to shape, dimensions and arrangements of parts, and construction which can me made without departing from the scope of the invention as defined in the accompanying claims. According to other embodiments, an internal screw-thread could be provided in the place of at least one of the external screw-threads of the driving shaft and transmission shaft, and the threaded parts of the traveler could be arranged in a corresponding manner.

## Claims

1. A rotating actuator for an active aerodynamics system, defining a longitudinal axis (x) and comprising:
a driving shaft (12) provided with a first screw-thread (20) and controlled by a motor (11) for rotation about the longitudinal axis (x);
a transmission shaft (15) parallel to the driving shaft (12), provided with a second screw-thread (14) and configured to couple with an adjustable part of the bodywork of a vehicle;
a transmission (25) coupled with the driving shaft (12) and with the transmission shaft (15), said transmission comprising:
a traveller (13) having a first threaded part (13a) and a second threaded part (13b);
a first drive screw coupling (30) between the first screw-thread (20) and the first threaded part (13a) of the traveller (13);
a second drive screw coupling (31) between the second screw-thread (14) and the second threaded part (13b) of the traveller (13);
wherein said transmission is adapted to transmit the rotating motion of the driving shaft (12) to the transmission shaft (15) by means of a translating motion of the traveller (13) relative to the driving shaft (12) and the transmission shaft (15);
wherein the driving shaft (12), the transmission shaft (15) and the transmission (25) are coaxial;
said rotating actuator being **characterized in that** one of said driving shaft (12) and transmission shaft (15) is a hollow shaft and the other of said driving shaft (12) and transmission shaft (15) is arranged partially within the hollow shaft.

2. Rotating actuator for an active aerodynamics system according to claim 1, further comprising a housing (17) having at least one guide (23a, 23b) in an inner surface thereof, wherein an outer surface of the traveller (13) has at least one interface portion (13c) which couples with said at least one guide (23a, 23b) in the inner surface of the housing (17), by means of a prismatic pair.

3. Rotating actuator for an active aerodynamics system according to claim 1 or 2, wherein the transmission (25) converts the rotating motion of the driving shaft (12) into the translating motion of the traveller (13) by means of the first drive screw coupling (30), and converts the translating motion of the traveller (13) into the rotating motion of the transmission shaft (15) by means of the second drive screw coupling (31).

4. Rotating actuator for an active aerodynamics system according to any preceding claim, wherein the second screw-thread (14) has a pitch greater than the pitch of the first screw-thread (20).

5. Rotating actuator for an active aerodynamics system according to any preceding claim, wherein the driving shaft (12) is hollow and the transmission shaft (15) is arranged partially within the driving shaft (12).

6. Rotating actuator for an active aerodynamics system according to any preceding claim, wherein the first screw-thread (20) and the second screw-thread (14) are outer threads, and wherein the first threaded part (13a) and the second threaded part (13b) of the traveller (13) are threaded cylindrical cavities of the traveller (13).

7. Rotating actuator for an active aerodynamics system according to any preceding claim, adapted to control the position of an adjustable part of the bodywork of a vehicle.

## Patentansprüche

1. Drehsteller für ein aktives Aerodynamiksystem, der eine Längsachse (x) definiert und umfassend:
eine Antriebswelle (12), die mit einem ersten Schraubengewinde (20) versehen ist und von einem Motor (11) zur Drehung um die Längsachse (x) gesteuert wird;
eine Übertragungswelle (15), die sich parallel zur Antriebswelle (12) erstreckt, die mit einem zweiten Schraubengewinde (14) versehen ist und dazu konfiguriert ist, mit einem verstellbaren Teil der Karosserie eines Fahrzeugs gekoppelt zu werden;
ein Getriebe (25), das mit der Antriebswelle (12) und der Übertragungswelle (15) gekoppelt ist, wobei das Getriebe (25) umfasst:
ein Verschiebungselement (13) aufweisend einen ersten Gewindeteil (13a) und einen zweiten Gewindeteil (13b);
eine erste Antriebsschraubenkupplung (30) zwischen dem ersten Schraubengewinde (20) und dem ersten Gewindeteil (13a) des Verschiebungselement (13);
eine zweite Antriebsschraubenkupplung (31) zwischen dem zweiten Schraubengewinde (14) und dem zweiten Gewindeteil (13b) des Verschiebungselement (13);
wobei das Getriebe (25) eingerichtet ist, die Drehbewegung der Antriebswelle (12) an die Übertragungswelle (15) mittels einer translatorischen Bewegung des Verschiebungselements (13) in Bezug auf die Antriebswelle (12) und die Übertragungswelle (15) zu übertragen;
wobei die Antriebswelle (12), die Übertragungswelle (15) und das Getriebe (25) koaxial sind;
wobei der Drehsteller **dadurch gekennzeichnet ist, dass** eine der Antriebswelle (12) und der Übertragungswelle (15) eine Hohlwelle ist und die andere der Antriebswelle (12) und der Übertragungswelle (15) teilweise innerhalb der Hohlwelle angeordnet ist.

2. Drehsteller für ein aktives Aerodynamiksystem nach Anspruch 1, ferner umfassend ein Gehäuse (17) aufweisend mindestens eine Führung (23a, 23b) in einer Innenfläche davon, wobei eine Außenfläche des Verschiebungselements (13) mindestens einen Schnittstellenabschnitt (13c) aufweist, der mit der mindestens einen Führung (23a, 23b) in der Innenfläche des Gehäuses (17) mittels eines prismatischen Paares gekoppelt wird.

3. Drehsteller für ein aktives Aerodynamiksystem nach Anspruch 1 oder 2, wobei das Getriebe (25) die Drehbewegung der Antriebswelle (12) mittels der ersten Antriebsschraubenkupplung (30) in eine translatorische Bewegung des Verschiebungselements (13) umwandelt und die translatorische Bewegung des Verschiebungselements (13) mittels der zweiten Antriebsschraubenkupplung (31) in die Drehbewegung der Übertragungswelle (15) umwandelt.

4. Drehsteller für ein aktives Aerodynamiksystem nach einem der vorhergehenden Ansprüche, wobei das zweite Schraubengewinde (14) eine Steigung aufweist, die größer als die Steigung des ersten Schraubengewindes (20) ist.

5. Drehsteller für ein aktives Aerodynamiksystem nach einem der vorhergehenden Ansprüche, wobei die Antriebswelle (12) hohl ist und die Übertragungswelle (15) teilweise innerhalb der Antriebswelle (12) angeordnet ist.

6. Drehsteller für ein aktives Aerodynamiksystem nach einem der vorhergehenden Ansprüche, wobei das erste Schraubengewinde (20) und das zweite Schraubengewinde (14) Außengewinde sind und wobei der erste Gewindeteil (13a) und der zweite Gewindeteil (13b) des Verschiebungselements (13) mit Gewinde zylindrische Hohlräume des Verschiebungselements (13) sind.

7. Drehsteller für ein aktives Aerodynamiksystem nach einem der vorhergehenden Ansprüche, der eingerichtet ist, die Position eines verstellbaren Teils der Karosserie eines Fahrzeugs zu steuern.

## Revendications

1. Actionneur rotatif pour un système aérodynamique actif, définissant un axe longitudinal (x) et comprenant:
un arbre d'entraînement (12) pourvu d'un premier filetage (20) et commandé par un moteur (11) pour tourner autour de l'axe longitudinal (x);
un arbre de transmission (15) parallèle à l'arbre d'entraînement (12), pourvu d'un second filetage (14) et configuré pour se coupler avec une partie réglable de la carrosserie d'un véhicule;
une transmission (25) couplée à l'arbre d'entraînement (12) et à l'arbre de transmission (15), ladite transmission comprenant:
un chariot (13) ayant une première partie filetée (13a) et une seconde partie filetée (13b);
un premier couplage par vis d'entraînement (30) entre le premier filetage (20) et la première partie filetée (13a) du chariot (13);
un second couplage par vis d'entraînement (31) entre le second filetage (14) et la seconde partie filetée (13b) du chariot (13);
où ladite transmission est adaptée pour transmettre le mouvement rotatif de l'arbre d'entraînement (12) à l'arbre de transmission (15) au moyen d'un mouvement de translation du chariot (13) par rapport à l'arbre d'entraînement (12) et à l'arbre de transmission (15);
où l'arbre d'entraînement (12), l'arbre de transmission (15) et la transmission (25) sont coaxiaux;
lequel actionneur rotatif étant **caractérisé en ce que** l'un desdits arbre d'entraînement (12) et arbre de transmission (15) est un arbre creux et l'autre desdits arbre d'entraînement (12) et arbre de transmission (15) est agencé partiellement à l'intérieur de l'arbre creux.

2. Actionneur rotatif pour un système aérodynamique actif selon la revendication 1, comprenant en outre un boîtier (17) ayant au moins un guide (23a, 23b) sur une surface interne, où une surface externe du chariot (13) présente au moins une portion d'interface (13c) qui se couple avec ledit au moins un guide (23a, 23b) sur la surface interne du boîtier (17), au moyen d'une liaison prismatique.

3. Actionneur rotatif pour un système aérodynamique actif selon la revendication 1 ou 2, où la transmission (25) convertit le mouvement rotatif de l'arbre d'entraînement (12) en un mouvement de translation du chariot (13) au moyen du premier couplage par vis d'entraînement (30), et convertit le mouvement de translation du chariot (13) en un mouvement rotatif de l'arbre de transmission (15) au moyen du second couplage par vis d'entraînement (31).

4. Actionneur rotatif pour un système aérodynamique actif selon l'une quelconque des revendications précédentes, où le second filetage (14) présente un pas supérieur au pas du premier filetage (20).

5. Actionneur rotatif pour un système aérodynamique actif selon l'une quelconque des revendications précédentes, où l'arbre d'entraînement (12) est creux et l'arbre de transmission (15) est agencé partiellement à l'intérieur de l'arbre d'entraînement (12).

6. Actionneur rotatif pour un système aérodynamique actif selon l'une quelconque des revendications précédentes, où le premier filetage (20) et le second filetage (14) sont des filetages extérieurs, et où la première partie filetée (13a) et la seconde partie filetée (13b) du chariot (13) sont des cavités cylindriques filetées du chariot (13).

7. Actionneur rotatif pour un système aérodynamique actif selon l'une quelconque des revendications précédentes, adapté pour commander la position d'une partie réglable de la carrosserie d'un véhicule.
